Europäisches Patentamt

European Patent Office

Office européen des brevets

(19)

(11) Publication number: **0 290 291**
A2

# (12) EUROPEAN PATENT APPLICATION

(21) Application number: **88304159.2**

(22) Date of filing: **09.05.88**

(51) Int. Cl.4: **F 16 L 19/02**
F 16 B 39/32

(30) Priority: **07.05.87 GB 8710809**

(43) Date of publication of application:
**09.11.88 Bulletin 88/45**

(84) Designated Contracting States:
**AT BE CH DE ES FR GB IT LI NL SE**

(71) Applicant: **STANDARD HOSE LIMITED**
**Owler Ings Mill Owler Ings Road**
**Brighouse West Yorkshire HD6 1EJ (GB)**

(72) Inventor: **Anderson, Roderick Seaton**
**Birk House Farm Bailiffe Bridge**
**Brighouse West Yorkshire HD6 4JL (GB)**

(74) Representative: **Wharton, Peter Robert et al**
**Urquhart-Dykes & Lord Alliance House 29-31 Kirkgate**
**Bradford West Yorkshire, BD1 1QB (GB)**

(54) **Hose pipe.**

(57) A locking system for the prevention of unwanted mutual rotation of components, for example the male 26 and female 20 portions of an end fitting or joint 10 of a hose pipe, comprises a spring loaded rod 36 mounted on one of the components for cooperating with a slot 34 in the other of the components. The rod and slot are so positioned that when the correct degree of rotation has occurred the rod engages the slot and prevents further mutual rotation of the componeents. By this means the overtightening of a joint may be prevented and the working loose of the same joint may be prevented also.

EP 0 290 291 A2

## Description

## HOSE PIPE

This invention relates to hose pipes and in particular relates to a locking system for end fittings or joints therefor.

It is common practice to connect flexible hoses or rigid pipes together, or to other mating parts, by fittings or joints. A particular form of joint is known as a 'female union joint' and comprises a captive rotatable nut which has an internal screw thread loosely fitted and held captive on an internal flange which has a sealing face. The complementary mating part of the joint has an external screw thread with a complementary sealing face. When the nut is rotated about the flange and screwed on to the male screw thread of the mating part the two sealing faces are drawn together to form a pressure type seal, often with a gasket positioned between the sealing surfaces to provide a more efficient seal. With such a joint it is possible to over-tighten the nut, causing damage to the gasket or other parts of the fitting. Equally the nut may become loose in use particularly if the pipe is subjected to vibration, twisting or other movement.

In the particular case of a female union joint where the sealing faces and/or gaskets are made of a material with a very low coefficient of friction, for example polytetrafluoroethylene, the problem of establishing and maintaining the correct degree of torque on the nut is particularly acute. This is especially so with the joint described in our co-pending application No. 8710807 filed herewith (reference P 41440 EP) which comprises a rotatable nut having an internal screw thread loosely fitted and held captive on an internal flange having a sealing face, and adapted to mate with a part having an external screw thread and a complementary sealing face characterised in that the bearing surface between the flange and the nut is reduced in friction.

The invention seeks to provide a nut locking system which reduces or overcomes the above disadvantages.

According to the present invention there is provided a locking system for the prevention of unwanted mutual rotation of components intended to be screwed together which comprises a spring loaded rod mounted on one of the components for cooperation with a slot in the other of the components so positioned that when the correct degree of rotation has occurred the rod engages the slot and prevents further mutual rotation.

Where the system of the invention is applied to hose pipe joints, the so called male portion of the joint can conveniently carry the spring loaded rod, and the slot may be formed in the nut. Experimentatin on a 'master' pair of components will determine where the slot and rod should be mounted in relation to one another so that the correct degree of torque will have been applied to the nut when the locking system engages. Subsequent copies can be made from the 'master'. The locking system of the invention therefore selects when the correct degree of tightening has been achieved, then prevents overtightening of, for example, nuts, especially the nuts used for tightening up hose pipe joints. Equally, however, the locking system of the invention prevents such nuts loosening in service, particularly where flexing of the components occurs.

Where a gasket or a washer of low friction material, for example polytetrafluoroethylene, is employed, such as in our above referred to co-pending application, a high degree of tightness is required to form a seal owing to the non-resilience of the material, but over-tightening can result in non-elastic deformation of the polytetrafluoroethylene material, and so the device of the invention is particularly valuable.

In order to facilitate release of the spring loaded rod from the slot when it is desired to untighten the nut to break the joint a trigger or the like may be provided whereby the rod maybe manually eased backwards out of the slot against the biassing force of its spring by the operator who may then untie the nut.

The invention will be described further, by way of example with reference to the accompanying drawing, the sole figure of which is a side view, partly in section, of a hose pipe joint incorporating a nut locking system in accordance with the invention.

Referring to the drawings, a female union joint generally designated 10 comprises a rotatable nut 12 having an internal screw thread 14 and an inwardly directed flange 16 with which it may be held captive against a flange 18 of the internal portion 20 of the fitting. The flange 18 has a sealing face 22 on which may be positioned a gasket 24.

The other part of the joint 10 is provided by a male fitting 26 with an externally threaded portion 28 and a complementary sealing surface 30.

In use, the joint 10 is made by bringing the male and female portions 20, 26 together and positioning the gasket 24 between the complementary sealing surfaces 22, 30 thereof. The nut 12 is engaged on the thread 28 and rotated so as to bring the surfaces 22 and 30 into sealing contact with the gasket 24. A conventional female union joint operates in this manner.

The joint 10 may additionally include a thrust washer 32 of a low friction material, especially polytetrafluoroethylene, positioned between the forward facing surface of the internally directed flange 16 of the nut and the rearwardly facing surface of the flange 18 in accordancee with our above mentioned co-pending application. These two surfaces form the bearng surfaces which the nut 12 engages as it is finally tightened on to the male fitting 26 to draw the joint together. Provision of the washer 32 ensures that the nut 12 can be turned to the requisite tightness without inducing torque into the hose or pipe connected to the part 20.

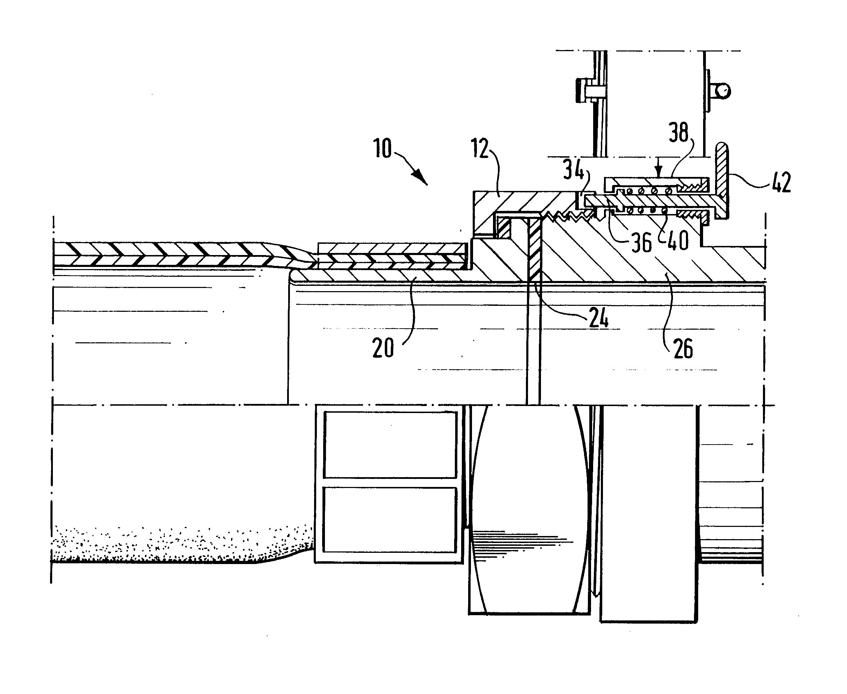

It can be seen that the nut 12 is provided with a slot 34 which co-acts with a spring loaded rod 36 mounted on the male portion 26. The rod 36 is mounted in a housing 38 and is biassed to the left (as viewed in figure 2) by means of a spring 40. A handle or trigger 42 is provided whereby the rod can manually be moved to the right in order to release it from the slot 34.

In use, the nut 12 is tightened as described above but during the final stage of the tightening process the rod 36 is compressed against the spring 40 by contact with the front surface of the nut during its final revolution, until the slot 34 comes into register with the spring loaded rod 36 which then snaps in to place in the slot 34 holding the nut against further rotation, either over-tightening or becoming loose in service. To undo the nut 12, the operator must manually move the trigger or handle 42 to release the rod 36 from the slot 34 after which the nut 12 can be untightened in the normal way.

The locking system of the invention is particularly useful when the gasket 24 is of a low friction material such as polytetrafluoroethylene which will often be the case where the hose is being used to transport corrosive fluids or fluids intended for human consumption. It has been found that the joint formed with a low friction washer 32 and locked by means of the device described with relation to figure 2, has the properties of a swivel joint and allows swivelling in service even under full internal pressure of fluid without leaking.

While the internally threaded member 12 has been described as a 'nut' it will be appreciated that it need not necessarily be driven with a spanneer or wrench. Indeed, in the preferred form, the nut 12 is provided with opposed bars or tommy rods with which it can be tightened and released manually without the need of a tool.

**Claims**

1. A locking system for the preevention of unwanted mutual rotation of components intended to be screwed together comprises a spring loaded rod 36 mounted on one of the components for cooperatinn with a slot 34 in the other of the components so positioned that when the correct degree of rotation has occurred the rod 36 engages the slot 34 and prevents further mutual rotation.

2. A locking system as claimed in claim 1 in which the components are the respective male and female portion of a hose pipe end fitting.

3. A system as claimed in claim 2 in which the male portion of the joint carries the spring loaded rod and the slot is formed in a nut carried by the female portion.

4. A system as claimed in any of claims 1 to 3 in which the relative cicumferential positions of the slot and the rod are so arranged that the compression applied by thee mutual screwing together of components is at a predetermined optimum value when the rod engages the slot.

5. A system as claimed in any of claim s 1 to 4 in which the rod is provided with a trigger whereby it may be manually eased out of the slot against the biassing force or its spring by an operator for the purpose of unscrewing the components.

0290291